# EUROPEAN PATENT SPECIFICATION

(11) **EP 3 868 512 B1**
(45) Date of publication and mention of the grant of the patent: **24.04.2024**
(21) Application number: 21166882.7
(22) Date of filing: 02.05.2018
(51) Int. Cl.: B23Q 11/00, B27M 1/00

(54) **A METHOD AND MACHINE TO PROCESS SECTION BARS, IN PARTICULAR MADE OF ALUMINIUM, LIGHT ALLOYS, PVC OR THE LIKE**
VERFAHREN UND MASCHINE ZUR VERARBEITUNG VON PROFILSTÄBEN, INSBESONDERE AUS ALUMINIUM, LEICHTLEGIERUNGEN, PVC ODER DERGLEICHEN
PROCÉDÉ ET MACHINE POUR TRAITER DES BARRES, FABRIQUÉES EN PARTICULIER EN ALUMINIUM, ALLIAGES LÉGERS, PVC OU ANALOGUES

(30) Priority: 02.05.2017 IT 201700046975
(43) Date of publication of application: 25.08.2021
(62) Divisional of application: 18170449.5
(73) Proprietor: F.O.M. Industrie S.r.l., 47841 Cattolica (RN) (IT)
(72) Inventor: LATTANZI, Lorenzo, 61121 Pesaro (PU) (IT)
(74) Representative: Studio Torta S.p.A.

(56) References cited:
- EP-A2- 2 159 022
- DE-A1- 19 734 628
- DE-A1-102004 013 859

## Description

The present invention relates to a machine to process section bars, in particular made of aluminium, light alloys, PVC or the like, according to the preamble of claim 1. Such a machine is known from document EP-2159022-A2.

In the field of section bars processing, it is known to provide a machine of the type comprising an elongated base; at least one processing station mounted along the base; and a feeding unit configured to hold the section bar at a rear end thereof and feed it along the base and through the processing station.

Generally, the processing station is provided with at least one operating head configured to perform operations of cutting and/or boring and/or milling of the section bars.

Since section bars normally have an annular cross-section or a shaped cross-section and the swarf generated by the operating head accumulates on the, and/or inside the section bars, the known machines for processing section bars of the type described above present various drawbacks, mainly deriving from the fact that the removal of the swarf must be carried out manually by those in charge, resulting in the dispersion of swarf in the environment, reducing the productivity of the machines themselves.

It is an object of the present invention to provide a machine to process section bars, in particular made of aluminium, light alloys, PVC or the like, which is without the previously described drawbacks and which is cheap and easy to use.

According to the present invention, there is provided a machine to process section bars, in particular made of aluminium, light alloys, PVC or the like, as claimed in claims from 1 to 5.

According to the present invention, there is also provided a method to process section bars, in particular made of aluminium, light alloys, PVC or the like, as claimed in claims from 6 to 12.

The present invention will now be described with reference to the appended drawings, which illustrate a nonlimiting embodiment thereof, wherein:
figure 1 is a schematic perspective view, with parts removed for clarity, of a preferred embodiment of the machine to process sections bars of the present invention;
figure 2 is a schematic perspective view, with parts removed for clarity, of a first variation of a detail of the machine in figure 1;
figure 3 is a schematic perspective view, with parts removed for clarity, of a second variation of a detail of the machine in figure 1;
figures 4 and 5 are two schematic perspective views, with parts removed for clarity, of a first variation of the machine in figure 1 illustrated in two different operating positions;
figure 6 is a schematic perspective view, with parts removed for clarity, of a second variation of the machine in figure 1; and
figure 7 is a schematic perspective view, with parts removed for clarity, of a detail of the machine in figure 6.

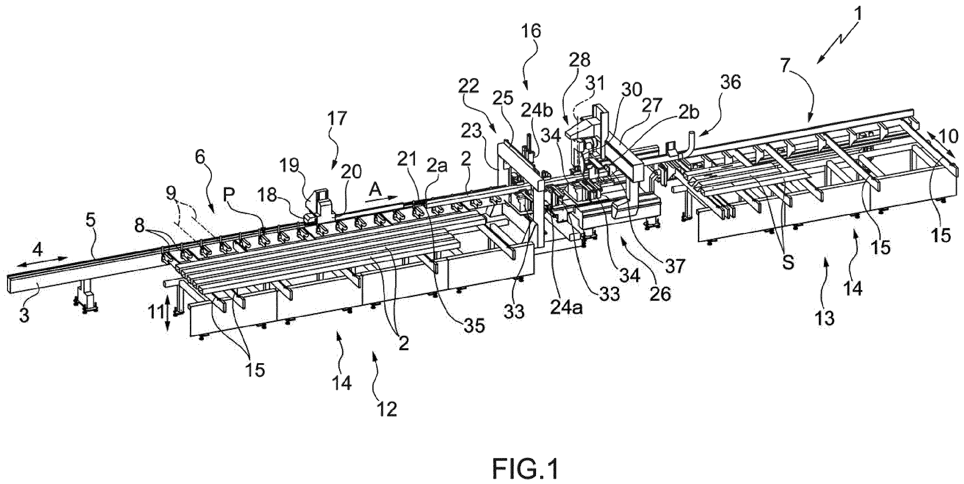

With reference to figure 1, a machine to process section bars 2, in particular made of aluminium, light alloys, PVC or the like, is globally indicated with 1. Each section bar 2 has an elongated shape and an annular or shaped cross-section.

The machine 1 comprises an elongated base 3, which extends in a horizontal direction 4, and is provided with a longitudinal guide 5 parallel to the direction 4.

The machine 1 further comprises two roller support devices 6, 7 mounted in series along the base 3. Each device 6, 7 has a plurality of rollers 8, which are mounted to rotate about respective rotation axes 9 substantially parallel to one another and to a horizontal direction 10 transversal to the direction 4, and they define a support plane P for at least one section bar 2.

Each roller 8 is movable in a vertical direction 11 orthogonal to the directions 4 and 10 between a raised operating position and a lowered rest position.

The machine 1 is further provided with a loading station 12 for the section bars 2 to be processed on the device 6 and an unloading station 13 for the section bars 2 processed by the device 7.

Each station 12, 13 comprises a conveyor belt 14, facing the relative device 6, 7 in the direction 10, and comprising, in turn, a plurality of conveying belts 15, which are parallel to one another and to the direction 10, extending between the rollers 8.

Furthermore, the machine 1 has a processing station 16, which is obtained along the base 3, between the stations 12, 13, and extends between the devices 6, 7.

The section bars 2 are fed on the plane P and along a feeding path A, extending through the station 16 in the direction 4 by a feeding device 17 comprising a first horizontal slide 18 slidingly coupled to the guide 5, to make rectilinear movements along the guide 5 in the direction 4, with respect to the base 3; a second horizontal slide 19 slidingly coupled to the horizontal slide 18, to make rectilinear movements in the direction 10, with respect to the horizontal slide 18; and a vertical slide 20 slidingly coupled to the horizontal slide 19, to make rectilinear movements in the direction 11, with respect to the horizontal slide 19.

The vertical slide 20 has an elongated shape, extends in the direction 4 and supports a holding member 21 connected to a free end of the vertical slide 20.

The member 21 is rotatably coupled to the vertical slide 20 to rotate, with respect to the vertical slide 20, about a rotation axis (not illustrated) parallel to the direction 4, and comprises two jaws (not illustrated), which are movable between a clamping position and a release position of the section bars 2.

The station 16 is provided with a milling unit 22, comprising an annular frame 23, which is mounted between the stations 12, 13, and extends about a section bar 2 feeding path; and a plurality of tool holder spindles 24, mounted parallel to the directions 10 and 11, which are each adapted to receive and hold a respective milling tool of a type known and not illustrated.

The spindles 24 are mounted onto the frame 23 by the interposition of an annular-shaped cross slide 25, which is configured to allow the spindles 24 to move with respect to the base 3 in the directions 10 and 11.

The spindles 24 parallel to the direction 10 (indicated hereafter with 24a) are coupled to the cross slide 25, to move independently of one another in the direction 10 with respect to the cross slide 25; and the spindles 24 parallel to the direction 11 (indicated hereafter with 24b) are coupled to the cross slide 25, to move independently of one another in the direction 11 with respect to the cross slide 25.

The station 16 is further provided with an overhead crane 26, which is mounted between the milling unit 22 and the station 13, and it is movable, with respect to the base 3, between the devices 6, 7 and the stations 12, 13 in the direction 4.

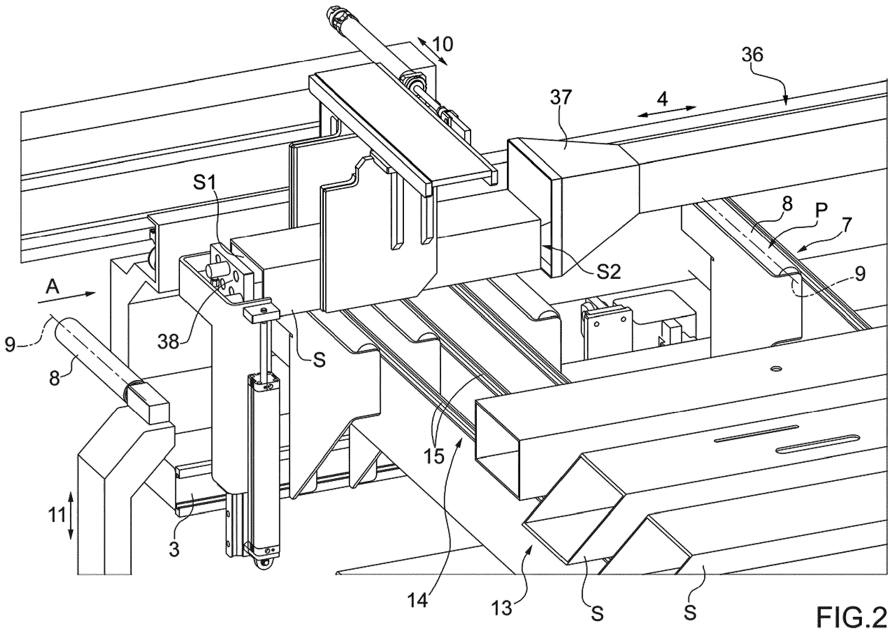

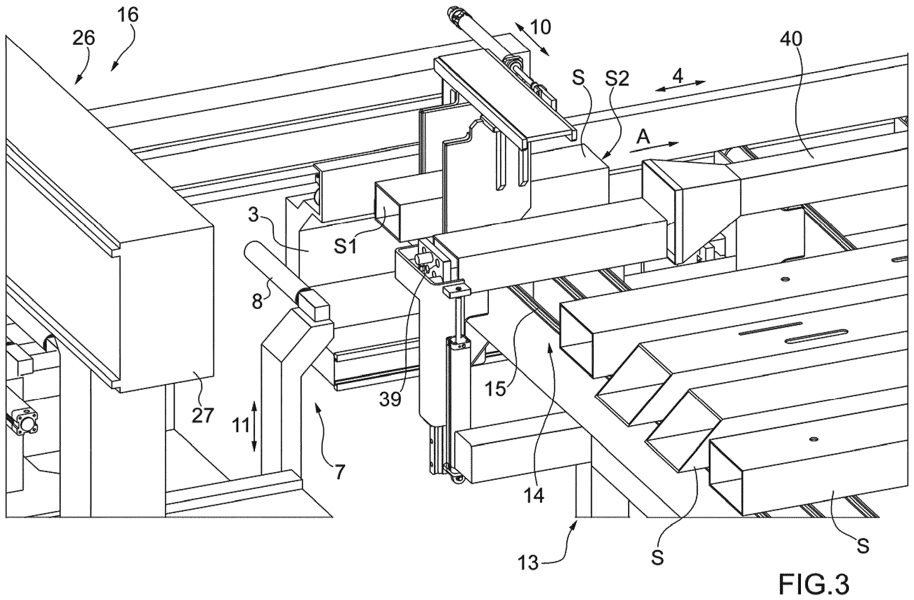

The overhead crane 26 comprises a horizontal crossbar 27, which extends above the plane P in the direction 10 and supports a cutting device 28 for cutting each section bar 2 into two pieces S (only one of which is illustrated in figures 2 and 3), and it further supports a boring and/or milling device (not illustrated) for boring the adjacent ends of the pieces S.

The device 28 is provided with a circular cutting blade 30, which is mounted to rotate about a longitudinal axis thereof, and it is movable with respect to the crossbar 27 in the directions 10 and 11, and about a rotation axis 31 parallel to the direction 11.

The boring and/or milling device (not illustrated) is provided with a boring and/or milling head, which is movable with respect to the crossbar 27 in the directions 10 and 11.

In this case, the station 16 is provided with two holding devices 33 associated with the milling unit 22 and two holding devices 34 associated with the overhead crane 26. The devices 33, 34 are movable along the base 3 in the direction 4, and they are configured to lock the section bars 2 in the directions 4, 10, and 11.

The swarf generated by the milling unit 22, the cutting device 28 and the boring device (not illustrated) is removed from the section bars 2 by the combined action of a blowing device 35 and a suction device 36.

The device 35 is mounted in the area of the free end of the vertical slide 20, facing a first free end 2a of the section bar 2 and it is arranged inside the path A and connected to a pneumatic compressed air device.

The device 36 is mounted on the opposite band of the device 35 with respect to the section bar 2 in the direction 4, and it comprises a suction hood 37 coupled to the base 3, to move in the directions 4 and 11 with respect to the base 3.

In use, the hood 37 is moved in the directions 4 and 11, to arrange itself inside the path A and in the area of a second free end 2b of the section bar 2, opposite the first free end 2a, and to suck a jet of compressed air fed by the device 35 along the section bar 2 from the first free end 2a.

The variation illustrated in figure 2 differs from the one illustrated in figure 1 only in that, therein:
the blowing device 35 is eliminated and replaced with a blowing device 38, which is mounted downstream of the station 16, and movable between a raised operating position, wherein the device 38 is arranged inside the path A in a position facing a first free end S1 of one of the pieces S, and a lowered rest position, wherein the device 38 is arranged outside the path A; and
the hood 37 is arranged in the area of a second free end S2 of the piece S, opposite the first free end S1.

The variation illustrated in figure 3 differs from the one illustrated in figure 1 only in that, therein, the blowing device 35 and the suction device 36 are eliminated and replaced with a blowing device 39 and a suction device 40, which are mounted in the unloading station 13, arranged outside the path A and associated with the free ends S1 and S2 of a piece S.

Preferably, the device 39 is fixed in the direction 4 and the device 40 is movable in the directions 4 and 11. Preferably, but not necessarily, the device 39 is movable in the direction 11.

According to a variation, which is not illustrated, the hood 37 is provided with a holding member for the section bars 2 or pieces S.

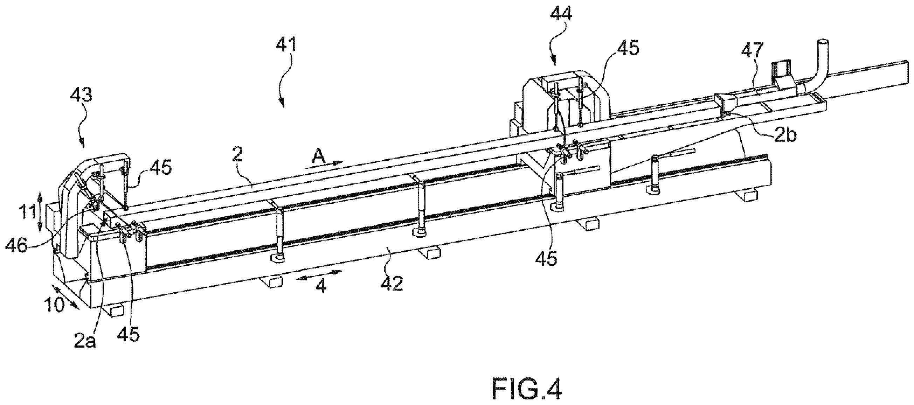

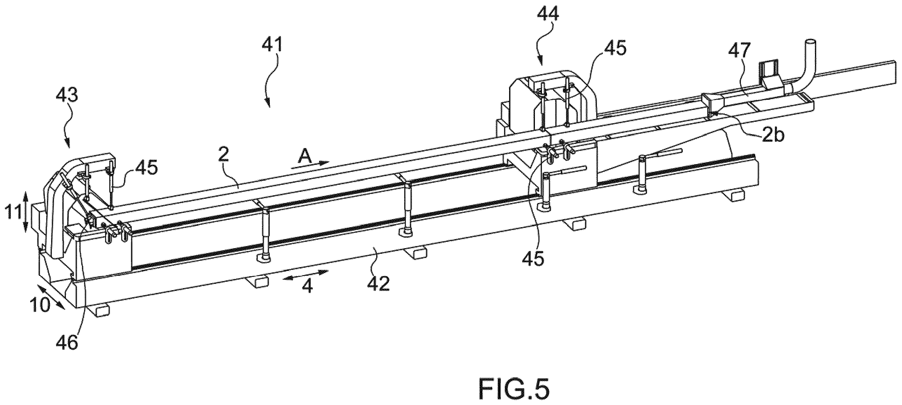

The variation illustrated in figures 4 and 5 relates to a machine 41 comprising an elongated base 42 extending in the direction 4; an operating head 43, which is mounted in the area of a free end of the base 42, and fixed in the direction 4; and an operating head 44 movable along the base 42 in the direction 4.

Each head 43, 44 is provided with a plurality of holding members 45 for locking the section bars 2 in the directions 4, 10, and 11.

The machine 41 further comprises a blowing device 46, which is mounted to the head 43, and movable between a raised rest position (figure 4), wherein the device 46 is arranged outside the feeding path A of the section bars 2 or pieces S, along the base 42, and a lowered operating position (figure 5), wherein the device 46 is arranged inside the path A, in a position facing the free end 2a of the section bar 2 or the free end S1 of the piece S.

The machine 41 further comprises a suction device 47, which is mounted on the opposite band of the device 46 with respect to the section bar 2 or piece S, in the direction 4, and it is coupled to the base 42 to move in the directions 4 and 11 with respect to the base 42.

According to a non-illustrated variation, the blowing device 46 is mounted in the base 42 and configured to generate a jet of compressed air, which is inclined with respect to the direction 11.

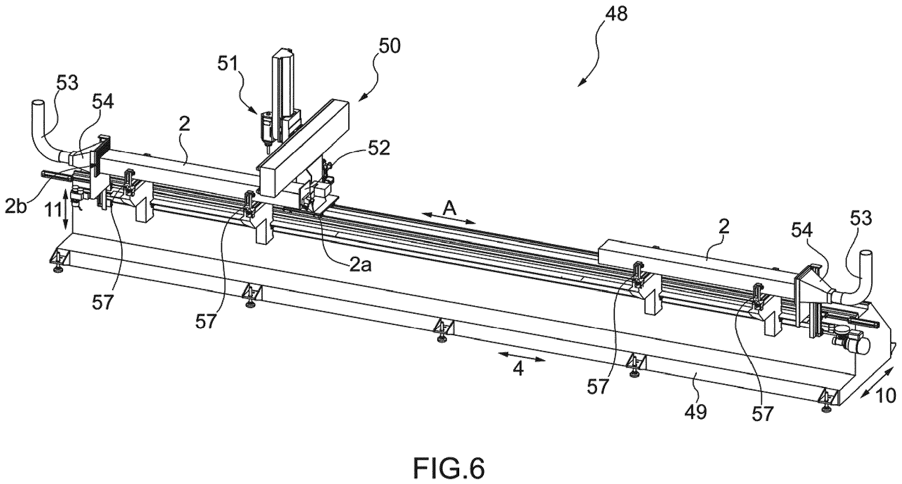

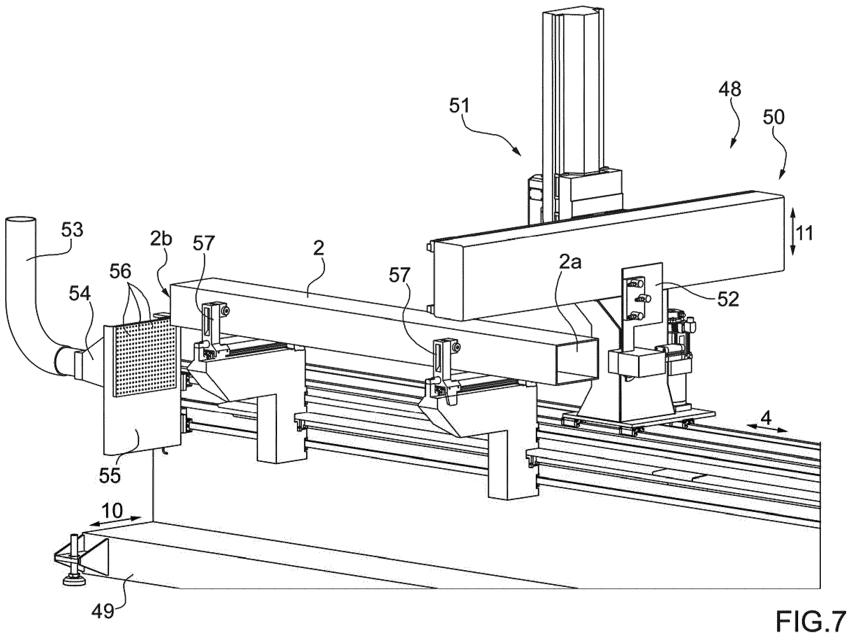

The variation illustrated in figures 6 and 7 relates to a machine 48 comprising an elongated base 49 extending in the direction 4, and an overhead crane 50, extending above the base 3 in the direction 10, which is slidingly coupled to the base 49, to make rectilinear movements in the direction 4, along the base 49.

The overhead crane 50 supports an operating head 51, slidingly coupled to the overhead crane 50, to move in the directions 10 and 11 with respect to the overhead crane 50.

The machine 48 is further provided with at least one blowing device 52, which is mounted to the overhead crane 50 and movable between a rest position (figure 7), wherein the device 52 is arranged outside the feeding path A of the section bars 2, or pieces S, along the base 49, and an operating position (figure 6), wherein the device 52 is arranged inside the path A, in a position facing the free end 2a of the section bar 2, or the free end S1 of the piece S.

The device 52 is limited by a substantially flat end face (not illustrated), which is provided with a plurality of blowing openings (not illustrated), and configured to define a limit stop element adapted to guarantee a correct positioning of the section bar 2, or piece S, in the direction 4, and/or to define a probing member adapted to identify the position of the section bar 2, or piece S, in the direction 4.

The machine 48 also has at least one suction device 53 (in this case two suction devices 53), which is slidingly coupled to the base 49 to move in the direction 4 and 11 with respect to the base 49, and it is movable between a rest position (figure 7), wherein the device 53 is arranged outside the feeding path A of the section bars 2, or pieces S, along the base 49, and an operating position (figure 6), wherein the device 53 is arranged inside the path A, in a position facing the free end 2b of the section bar 2 or the free end S2 of the piece S.

The device 53 comprises a suction hood 54 limited by a substantially flat end face 55, which extends perpendicularly to the direction 4, defines a limit stop element to guarantee a correct positioning of the section bar 2, or piece S, in the direction 4, and has a plurality of suction openings 56 for the swarf.

The base 49 further supports a plurality of holding and transport devices 57, which are distributed along the base 49 and configured to hold at least one section bar 2, or one piece S, and they are slidingly coupled to the base 49 to make rectilinear movements along the base 49 in the direction 4.

According to two non-illustrated variations:
the device 52 is movable along the base 49 in the direction 4 independently of the overhead crane 50; and
the hood 54 is mounted to the overhead crane 50.

As regards the above, it should be pointed out that:
the blowing devices 35, 38, 39, 46, 52 are operated when the section bars 2, or pieces S, are held by the holding devices 17, 45, 57; and
the blowing devices 35, 38, 39, 46, 52 are operated during and/or after the processing of the operating heads 22, 28, 29, 43, 44, 51.

Thus, the blowing devices 35, 38, 39, 46, 52 and the suction devices 36, 40, 47, 53 allow the removal of the swarf, which has accumulated on, or inside the, section bars 2 or on, or inside the pieces S, they considerably limit the dispersion of swarf in the environment and guarantee the machines 1, 41, 48 relatively elevated productivity.

## Claims

1. A machine to process section bars (2), in particular made of aluminium, light alloys, PVC or the like, comprising at least one holding device (17; 45; 57), to hold at least one section bar (2); at least one operating head (22, 28, 29; 43, 44; 51); and actuator means to move the holding device (17; 45; 57) and the operating head (22, 28, 29; 43, 44; 51) with respect to one another, to allow the operating head (22, 28, 29; 43, 44; 51) to process the section bar (2); and **characterized in that** it further comprises a blowing device (35; 38; 39; 46; 52) to blow a gas under pressure along the, in particular into the, section bar (2) or along a, in particular into a, piece (S) of section bar (2) starting from a first free end thereof (2a; S1) so as to remove swarf, and a suction device (36; 40; 47; 53) to suck the gas under pressure in the area of a second free end (2b; S2) of the section bar (2), or piece (S) of section bar (2), opposite the first free end (2a; S1); the operating head (22, 28, 29; 43, 44; 51) being movable along the section bar (2); the blowing device (35; 38; 39; 46; 52) and/or the suction device (36; 40; 47; 53) being movable along the section bar (2), together with the operating head (22, 28, 29; 43, 44; 51) or independently of the operating head (22, 28, 29; 43, 44; 51) .

2. The machine according to claim 1, wherein the blowing device (35; 38; 39; 46; 52) is movable between an operating position, wherein the blowing device (35; 38; 39; 46; 52) is facing the first free end (2a; S1), and a rest position, wherein the blowing device (35; 38; 39; 46; 52) disengages the first free end (2a; S1).

3. The machine according to claim 1 or 2, wherein the suction device (36; 40; 47; 53) is movable between an operating position, wherein the suction device (36; 40; 47; 53) is facing the second free end (2b; S2), and a rest position, wherein the suction device (36; 40; 47; 53) disengages the second free end (2b; S2).

4. The machine according to any one of the preceding claims, wherein the holding device (17; 45; 57) is movable along a feeding path (A) extending through a processing station (16) provided with said operating head (22, 28, 29; 43, 44; 51).

5. The machine according to any one of the preceding claims, wherein the holding device (17; 45; 57) is movable along a feeding path (A), extending through a processing station (16) provided with said operating head (22, 28, 29; 43, 44; 51); the blowing device (35; 38; 39; 46; 52) and/or the suction device (36; 40; 47; 53) being movable along the feeding path (A) together with the holding device (17; 45; 57) or independently of the holding device (17; 45; 57).

6. A method to process section bars (2), in particular made of aluminium, light alloys, PVC or the like, in a machine comprising at least one holding device (17; 45; 57) to hold at least one section bar (2) and at least one operating head (22, 28, 29; 43, 44; 51) to process the section bar (2); the method comprising the steps of:
moving the holding device (17; 45; 57) and the operating head (22, 28, 29; 43, 44; 51) with respect to each other; and
processing the section bar (2) by means of the operating head (22, 28, 29; 43, 44; 51);
and being **characterized in that** it further comprises the steps of:
blowing a gas under pressure using a blowing device (35; 38; 39; 46; 52) along, in particular, into, the section bar (2) or along, in particular into, a piece (S) of section bar (2) starting from a first free end (2a; S1) thereof, so as to remove swarf;
sucking the gas under pressure using a suction device (36; 40; 47; 53) in the area of a second free end (2b; S2) of the section bar (2), or piece (S) of section bar (2), opposite the first free end (2a; S1);
moving the operating head (22, 28, 29; 43, 44; 51) along the section bar (2); and
moving the blowing device (35; 38; 39; 46; 52) and/or the suction device (36; 40; 47; 53) along the section bar (2) together with the operating head (22, 28, 29; 43, 44; 51) or independently of the operating head (22, 28, 29; 43, 44; 51) .

7. The method according to claim 6 and further comprising the step of:
moving the blowing device (35; 38; 39; 46; 52) between an operating position, wherein the blowing device (35; 38; 39; 46; 52) is facing the first free end (2a; S1), and a rest position, wherein the blowing device (35; 38; 39; 46; 52) disengages the first free end (2a; S1).

8. The method according to claim 6 or 7 and further comprising the step of:
moving the suction device (36; 40; 47; 53) between an operating position, wherein the suction device (36; 40; 47; 53) is facing the second free end (2b; S2), and a rest position, wherein the suction device (36; 40; 47; 53) disengages the second free end (2b; S2).

9. The method according to claim 7 and/or 8 and further comprising the step of:
moving the blowing device (35; 38; 39; 46; 52) and/or the suction device (36; 40; 47; 53) inside a feeding path (A) of the section bar (2) through a processing station (16) provided with said operating head (22, 28, 29; 43, 44; 51) .

10. The method according to any one of the claims from 6 to 9 and further comprising the steps of:
moving the holding device (17; 45; 57) along a feeding path (A) extending through a processing station (16) provided with said operating head (22, 28, 29; 43, 44; 51); and
moving the blowing device (35; 38; 39; 46; 52) and/or the suction device (36; 40; 47; 53) along the feeding path (A) together with the holding device (17; 45; 57) or independently of the holding device (17; 45; 57).

11. The method according to any one of the claims from 6 to 10, wherein the gas under pressure is blown along the section bar (2), or piece (S), when the section bar (2), or piece (S), are held by the holding device (17; 45; 57) .

12. The method according to any one of the claims from 6 to 11, wherein the gas under pressure is blown along the section bar (2), or piece (S), during the processing of the operating head (22, 28, 29; 43, 44; 51).

## Patentansprüche

1. Maschine zum Verarbeiten von Profilstangen (2), insbesondere aus Aluminium, Leichtmetalllegierungen, PVC oder dergleichen, umfassend zumindest eine Haltevorrichtung (17; 45; 57), um zumindest eine Profilstange (2) zu halten, zumindest einen Bedien- bzw. Arbeitskopf (22, 28, 29; 43, 44; 51); und Aktormittel, um die Haltevorrichtung (17; 45; 57) und den Arbeitskopf (22, 28, 29; 43, 44; 51) in Bezug aufeinander zu bewegen, um dem Arbeitskopf (22, 28, 29; 43, 44; 51) zu erlauben, die Profilstange (2) zu verarbeiten; und **dadurch gekennzeichnet, dass** sie ferner eine Blasvorrichtung (35; 38; 39; 46; 52), um ein unter Druck stehendes Gas entlang der, insbesondere in die, Profilstange (2) oder entlang eines, insbesondere in ein, Stück (S) der Profilstange (2) ausgehend von einem ersten freien Ende (2a; S1) zu blasen, um Späne zu entfernen, und eine Saugvorrichtung (36; 40; 47; 53) umfasst, um das unter Druck stehende Gas in dem Bereich eines zweiten freien Endes (2b; S2) der Profilstange (2) oder eines Stücks (S) der Profilstange (2) gegenüberliegend bzw. entgegengesetzt dem ersten freien Ende (2a; S1) anzusaugen; wobei der Arbeitskopf (22, 28, 29; 43, 44; 51) entlang der Profilstange (2) beweglich ist, wobei die Blasvorrichtung (35; 38; 39; 46; 52) und/oder die Saugvorrichtung (36; 40; 47; 53) entlang der Profilstange (2) zusammen mit dem Arbeitskopf (22, 28, 29; 43, 44; 51) oder unabhängig von dem Arbeitskopf (22, 28, 29; 43, 44; 51) beweglich ist bzw. sind.

2. Maschine nach Anspruch 1, wobei die Blasvorrichtung (35; 38; 39; 46; 52) zwischen einer Betriebsposition, wobei die Blasvorrichtung (35; 38; 39; 46; 52) dem ersten freien Ende (2a; S1) zugewandt ist, und einer Ruheposition beweglich ist, in der die Blasvorrichtung (35; 38; 39; 46; 52) das erste freie Ende (2a; S1) freigibt bzw. außer Eingriff bringt.

3. Maschine nach Anspruch 1 oder 2, wobei die Saugvorrichtung (36; 40; 47; 53) zwischen einer Betriebsposition, wobei die Saugvorrichtung (36; 40; 47; 53) dem zweiten freien Ende (2b; S2) zugewandt ist, und einer Ruheposition beweglich ist, in der die Saugvorrichtung (36; 40; 47; 53) das zweite freie Ende (2b; S2) freigibt bzw. außer Eingriff bringt.

4. Maschine nach einem der vorhergehenden Ansprüche, wobei die Haltevorrichtung (17; 45; 57) entlang eines Zufuhrwegs (A) beweglich ist, der sich durch eine Verarbeitungsstation (16) erstreckt, die mit dem Arbeitskopf (22, 28, 29; 43, 44; 51) versehen ist.

5. Maschine nach einem der vorhergehenden Ansprüche, wobei die Haltevorrichtung (17; 45; 57) entlang eines Zufuhrwegs (A) beweglich ist, der sich durch eine Verarbeitungsstation (16) erstreckt, die mit dem Arbeitskopf (22, 28, 29; 43, 44; 51) versehen ist; wobei die Blasvorrichtung (35; 38; 39; 46; 52) und/oder die Saugvorrichtung (36; 40; 47; 53) entlang des Zufuhrwegs (A) zusammen mit der Haltevorrichtung (17; 45; 57) oder unabhängig von der Haltevorrichtung (17; 45; 57) beweglich sind.

6. Verfahren zum Verarbeiten von Profilstangen (2), insbesondere aus Aluminium, Leichtmetalllegierungen, PVC oder dergleichen, in einer Maschine, die zumindest eine Haltevorrichtung (17; 45; 57), um zumindest eine Profilstange (2) zu halten, und zumindest einen Bedien- bzw. Arbeitskopf (22, 28, 29; 43, 44; 51) umfasst, um die Profilstange (2) zu verarbeiten; wobei das Verfahren die Schritte umfasst:
Bewegen der Haltevorrichtung (17; 45; 57) und des Arbeitskopfes (22, 28, 29; 43, 44; 51) in Bezug aufeinander; und
Verarbeiten der Profilstange (2) mittels des Arbeitskopfes (22, 28, 29; 43, 44; 51);
und **dadurch gekennzeichnet, dass** es ferner die Schritte umfasst: Blasen eines Gases unter Druck unter Verwendung einer Blasvorrichtung (35; 38; 39; 46; 52) entlang der, insbesondere in die, Profilstange (2) oder entlang eines, insbesondere in ein, Stück (S) der Profilstange (2) ausgehend von einem ersten freien Ende (2a; S1) davon, um Späne zu entfernen,
Ansaugen des Gases unter Druck unter Verwendung einer Saugvorrichtung (36; 40; 47; 53) in dem Bereich eines zweiten freien Endes (2b; S2) der Profilstange (2) oder eines Stücks (S) der Profilstange (2) gegenüberliegend bzw. entgegengesetzt dem ersten freien Ende (2a; S1);
Bewegen des Arbeitskopfes (22, 28, 29; 43, 44; 51) entlang der Profilstange (2); und
Bewegen der Blasvorrichtung (35; 38; 39; 46; 52) und/oder der Saugvorrichtung (36; 40; 47; 53) entlang der Profilstange (2) zusammen mit dem Arbeitskopf (22, 28, 29; 43, 44; 51) oder unabhängig von dem Arbeitskopf (22, 28, 29; 43, 44; 51).

7. Verfahren nach Anspruch 6 und ferner umfassend den Schritt:
Bewegen der Blasvorrichtung (35; 38; 39; 46; 52) zwischen einer Betriebsposition, wobei die Blasvorrichtung (35; 38; 39; 46; 52) dem ersten freien Ende (2a; S1) zugewandt ist, und einer Ruheposition, wobei die Blasvorrichtung (35; 38; 39; 46; 52) das erste freie Ende (2a; S1) freigibt bzw. außer Eingriff bringt.

8. Verfahren nach Anspruch 6 oder 7 und ferner umfassend den Schritt:
Bewegen der Saugvorrichtung (36; 40; 47; 53) zwischen einer Betriebsposition, wobei die Saugvorrichtung (36; 40; 47; 53) dem zweiten freien Ende (2b; S2) zugewandt ist, und einer Ruheposition, wobei die Saugvorrichtung (36; 40; 47; 53) das zweite freie Ende (2b; S2) freigibt bzw. außer Eingriff bringt.

9. Verfahren nach Anspruch 7 und/oder 8 und ferner umfassend den Schritt:
Bewegen der Blasvorrichtung (35; 38; 39; 46; 52) und/oder der Saugvorrichtung (36; 40; 47; 53) innerhalb eines Zufuhrweges (A) der Profilstange (2) durch eine Verarbeitungsstation (16), die mit dem Arbeitskopf (22, 28, 29; 43, 44; 51) versehen ist.

10. Verfahren nach einem der Ansprüche 6 bis 9 und ferner umfassend die Schritte:
Bewegen der Haltevorrichtung (17; 45; 57) entlang eines Zufuhrweges (A), der sich durch eine Verarbeitungsstation (16) erstreckt, die mit dem Arbeitskopf (22, 28, 29; 43, 44; 51) versehen ist, und
Bewegen der Blasvorrichtung (35; 38; 39; 46; 52) und/oder der Saugvorrichtung (36; 40; 47; 53) entlang des Zufuhrweges (A) zusammen mit der Haltevorrichtung (17; 45; 57) oder unabhängig von der Haltevorrichtung (17; 45; 57).

11. Verfahren nach einem der Ansprüche 6 bis 10, wobei das unter Druck stehende Gas entlang der Profilstange (2) oder des Stücks (S) geblasen wird, wenn die Profilstange (2) oder das Stück (S) durch die Haltevorrichtung (17; 45; 57) gehalten ist.

12. Verfahren nach einem der Ansprüche 6 bis 11, wobei das unter Druck stehende Gas während der Verarbeitung des Arbeitskopfes bzw. durch den Arbeitskopf (22, 28, 29; 43, 44; 51) entlang der Profilstange (2) oder des Stücks (S) geblasen wird.

## Revendications

1. Machine pour traiter des profilés (2), en particulier constitués d'aluminium, d'alliages légers, de PVC ou de matériaux similaires, comprenant au moins un dispositif de maintien (17 ; 45 ; 57) pour maintenir au moins un profilé (2) ; au moins une tête de fonctionnement (22, 28, 29 ; 43, 44 ; 51) ; et des moyens d'actionnement pour déplacer le dispositif de maintien (17 ; 45 ; 57) et la tête de fonctionnement (22, 28, 29 ; 43, 44 ; 51) l'un par rapport à l'autre, pour permettre à la tête de fonctionnement (22, 28, 29 ; 43, 44 ; 51) de traiter le profilé (2) ; et **caractérisée en ce qu'**elle comprend en outre un dispositif de soufflage (35 ; 38 ; 39 ; 46 ; 52) pour souffler un gaz sous pression le long du profilé (2), en particulier dans celui-ci, ou le long d'une pièce (S) du profilé (2), en particulier dans celle-ci, à partir d'une première extrémité libre (2a ; 51) de celui-ci de manière à enlever des copeaux, et un dispositif d'aspiration (36 ; 40 ; 47 ; 53) pour aspirer le gaz sous pression dans la zone d'une deuxième extrémité libre (2b ; 52) du profilé (2), ou d'une pièce (S) du profilé (2), à l'opposé de la première extrémité libre (2a ; 51) ; la tête de fonctionnement (22, 28, 29 ; 43, 44 ; 51) étant mobile le long du profilé (2) ; le dispositif de soufflage (35 ; 38 ; 39 ; 46 ; 52) et/ou le dispositif d'aspiration (36 ; 40 ; 47; 53) étant mobiles le long du profilé (2) solidairement avec la tête de fonctionnement (22, 28, 29 ; 43, 44; 51) ou indépendamment de la tête de fonctionnement (22, 28, 29 ; 43, 44 ; 51).

2. Machine selon la revendication 1, dans laquelle le dispositif de soufflage (35 ; 38 ; 39 ; 46 ; 52) est mobile entre une position de fonctionnement à laquelle le dispositif de soufflage (35 ; 38 ; 39 ; 46 ; 52) fait face à la première extrémité libre (2a ; 51) et une position de repos à laquelle le dispositif de soufflage (35 ; 38 ; 39 ; 46 ; 52) se désengage de la première extrémité libre (2a ; S1).

3. Machine selon la revendication 1 ou 2, dans laquelle le dispositif d'aspiration (36 ; 40 ; 47 ; 53) est mobile entre une position de fonctionnement à laquelle le dispositif d'aspiration (36 ; 40 ; 47 ; 53) fait face à la deuxième extrémité libre (2b ; S2) et une position de repos à laquelle le dispositif d'aspiration (36 ; 40 ; 47 ; 53) se désengage de la deuxième extrémité libre (2b ; S2).

4. Machine selon l'une quelconque des revendications précédentes, dans laquelle le dispositif de maintien (17 ; 45 ; 57) est mobile le long d'un trajet d'alimentation (A) s'étendant à travers un poste de traitement (16) doté de ladite tête de fonctionnement (22, 28, 29 ; 43, 44 ; 51).

5. Machine selon l'une quelconque des revendications précédentes, dans laquelle le dispositif de maintien (17 ; 45 ; 57) est mobile le long d'un trajet d'alimentation (A), s'étendant à travers un poste de traitement (16) doté de ladite tête de fonctionnement (22, 28, 29 ; 43, 44 ; 51) ; le dispositif de soufflage (35 ; 38 ; 39 ; 46 ; 52) et/ou le dispositif d'aspiration (36 ; 40 ; 47 ; 53) étant mobiles le long du trajet d'alimentation (A) solidairement avec le dispositif de maintien (17 ; 45 ; 57) ou indépendamment du dispositif de maintien (17 ; 45 ; 57).

6. Procédé pour traiter des profilés (2), en particulier constitués d'aluminium, d'alliages légers, de PVC ou de matériaux similaires, dans une machine comprenant au moins un dispositif de maintien (17 ; 45 ; 57) pour maintenir au moins un profilé (2) et au moins une tête de fonctionnement (22, 28, 29 ; 43, 44; 51) pour traiter le profilé (2) ; le procédé comprenant les étapes consistant à :
déplacer le dispositif de maintien (17 ; 45 ; 57) et la tête de fonctionnement (22, 28, 29 ; 43, 44 ; 51) l'un par rapport à l'autre ; et
traiter le profilé (2) au moyen de la tête de fonctionnement (22, 28, 29 ; 43, 44 ; 51) ;
et étant **caractérisé en ce qu'**il comprend en outre les étapes consistant à :
souffler un gaz sous pression en utilisant un dispositif de soufflage (35 ; 38 ; 39 ; 46 ; 52) le long du profilé (2), en particulier dans celui-ci, ou le long d'une pièce (S) du profilé (2), en particulier dans celle-ci, à partir d'une première extrémité libre (2a ; 51) de celui-ci de manière à enlever des copeaux ;
aspirer le gaz sous pression en utilisant un dispositif d'aspiration (36 ; 40 ; 47 ; 53) dans la zone d'une deuxième extrémité libre (2b ; S2) du profilé (2), ou d'une pièce (S) du profilé (2), à l'opposé de la première extrémité libre (2a ; 51) ;
déplacer la tête de fonctionnement (22, 28, 29 ; 43, 44; 51) le long du profilé (2) ; et
déplacer le dispositif de soufflage (35 ; 38 ; 39 ; 46 ; 52) et/ou le dispositif d'aspiration (36 ; 40 ; 47 ; 53) le long du profilé (2) solidairement avec la tête de fonctionnement (22, 28, 29; 43, 44; 51) ou indépendamment de la tête de fonctionnement (22, 28, 29 ; 43, 44 ; 51).

7. Procédé selon la revendication 6, comprenant en outre l'étape consistant à :
déplacer le dispositif de soufflage (35 ; 38 ; 39 ; 46 ; 52) entre une position de fonctionnement à laquelle le dispositif de soufflage (35 ; 38 ; 39 ; 46 ; 52) fait face à la première extrémité libre (2a ; 51) et une position de repos à laquelle le dispositif de soufflage (35 ; 38 ; 39 ; 46 ; 52) se désengage de la première extrémité libre (2a ; 51).

8. Procédé selon la revendication 6 ou 7, comprenant en outre l'étape consistant à :
déplacer le dispositif d'aspiration (36 ; 40 ; 47 ; 53) entre une position de fonctionnement à laquelle le dispositif d'aspiration (36 ; 40 ; 47 ; 53) fait face à la deuxième extrémité libre (2b ; S2) et une position de repos à laquelle le dispositif d'aspiration (36 ; 40 ; 47 ; 53) se désengage de la deuxième extrémité libre (2b ; S2).

9. Procédé selon la revendication 7 et/ou 8, comprenant en outre l'étape consistant à :
déplacer le dispositif de soufflage (35 ; 38 ; 39 ; 46 ; 52) et/ou du dispositif d'aspiration (36 ; 40 ; 47 53) à l'intérieur d'un trajet d'alimentation (A) du profilé (2) à travers un poste de traitement (16) doté de ladite tête de fonctionnement (22, 28, 29 ; 43, 44 ; 51).

10. Procédé selon l'une quelconque des revendications 6 à 9, comprenant en outre les étapes consistant à :
déplacer le dispositif de maintien (17 ; 45 ; 57) le long d'un trajet d'alimentation (A) s'étendant à travers un poste de traitement (16) doté de ladite tête de fonctionnement (22, 28, 29 ; 43, 44 ; 51) ; et
déplacer le dispositif de soufflage (35 ; 38 ; 39 ; 46 ; 52) et/ou le dispositif d'aspiration (36 ; 40 ; 47 ; 53) le long du trajet d'alimentation (A) solidairement avec le dispositif de maintien (17 ; 45 ; 57) ou indépendamment du dispositif de maintien (17 ; 45 ; 57).

11. Procédé selon l'une quelconque des revendications 6 à 10, dans lequel le gaz sous pression est soufflé le long du profilé (2) ou de la pièce (S) lorsque le profilé (2) ou la pièce (S) est maintenu par le dispositif de maintien (17 ; 45 ; 57).

12. Procédé selon l'une quelconque des revendications 6 à 11, dans lequel le gaz sous pression est soufflé le long du profilé (2) ou de la pièce (S) pendant le traitement de la tête de fonctionnement (22, 28, 29 ; 43, 44 ; 51).
